# EUROPÄISCHE PATENTSCHRIFT

(11) **EP 0 691 505 B1**
(45) Veröffentlichungstag und Bekanntmachung des Hinweises auf die Patenterteilung: **04.02.1998**
(21) Anmeldenummer: 95108950.7
(22) Anmeldetag: 10.06.1995
(51) Int. Cl.: F16L 47/00

(54) **Anschlussvorrichtung für Druckleitungen**
Connection device for pressure lines
Dispositif de raccordement pour des conduites sous pression

(30) Priorität: 06.07.1994 DE 4423820
(43) Veröffentlichungstag der Anmeldung: 10.01.1996
(73) Patentinhaber: ARMATURENFABRIK HERMANN VOSS GMBH & CO., D-51688 Wipperfürth (DE)
(72) Erfinder: Brandt, Josef, D-51688 Wipperfürth (DE)
(74) Vertreter: Patentanwälte Dr. Solf & Zapf

(56) Entgegenhaltungen:
- EP-A- 0 005 865
- EP-A- 0 482 204
- WO-A-86/03570
- US-A- 4 905 766

## Beschreibung

Die vorliegende Erfindung betrifft eine Anschlußvorrichtung für Druckleitungen, mit einem eine Aufnahmeöffnung zum umfänglich abgedichteten Einstecken eines Steckerteils aufweisenden Gehäuseteil, wobei das Gehäuseteil zweiteilig aus einem Basisteil und einem lösbar in das Basisteil eingesetzten Einsatzteil besteht und zwischen dem Basisteil und dem Einsatzteil eine Dichtringkammer zur Aufnahme eines das Einsatzteil gegen das Basisteil abdichtenden, elastischen Dichtringes gebildet ist.

Eine solche Anschlußvorrichtung ist beispielsweise aus der EP-B1-0 005 865 bekannt. Die Zweiteilung des Gehäuseteils dient dazu, eine Lösbarkeit des eingesteckten, über einen in einer inneren Ringkammer gelagerten Haltering arretierten Steckerteils zu gewährleisten, indem die den Haltering aufnehmende Ringkammer zwischen dem Einsatzteil und einer Bohrungsstufenfläche des Basisteils gebildet ist. Hierdurch kann nach Lösen des Einsatzteils das Steckerteil zusammen mit dem in eine äußere Steckerringnut eingreifenden Haltering entnommen werden. Zur Abdichtung der Anschlußvorrichtung nach außen ist einerseits auf dem Steckerteil mindestens ein äußerer Dichtring angeordnet, der im eingesteckten Zustand den Spalt zur Aufnahmeöffnung abdichtet. Andererseits muß aufgrund des zweiteilig ausgebildeten Gehäuseteils auch zwischen dem Basisteil und dem Einsatzteil ein Dichtring angeordnet sein.

Nun ist es heute in zunehmendem Maße erwünscht, das Basisteil und das Einsatzteil aus verschiedenen Werkstoffen herzustellen, und zwar insbesondere das Basisteil aus Kunststoff und das Einsatzteil aus Metall. Es hat sich aber gezeigt, daß bei einer solchen Werkstoffkombination (Kunststoff-Metall-Kombination) im praktischen Einsatz, und zwar insbesondere bei Kfz-Bremssystemen, wie Druckluft-Bremsanlagen in LKW, oftmals Undichtigkeiten zwischen dem Basisteil und dem Einsatzteil auftreten.

Der vorliegenden Erfindung liegt daher die Aufgabe zugrunde, bei einer Anschlußvorrichtung der gattungsgemäßen Art die Abdichtung zwischen dem Basisteil und dem Einsatzteil so zu verbessern, daß unter nahezu allen in der Praxis denkbaren Einsatzbedingungen die Dichtigkeit gewährleistet ist, und zwar insbesondere auch bei Verwendung einer Kunststoff-Metall-Kombination des Basisteils und des Einsatzteils.

Erfindungsgemäß wird dies dadurch erreicht, daß innerhalb der Dichtringkammer mindestens eine den Kammer-Querschnitt (Axialschnitt bezogen auf die Steck- bzw. Verbindungsachse) über den gesamten Umfang hinweg reduzierende Ringerhebung derart gebildet ist, daß der Dichtring zonal und insbesondere in etwa radialer Richtung mit einer erhöhten Verpressung beaufschlagt ist. Zusätzlich oder alternativ besteht eine erfindungsgemäße Lösung darin,daß der Dichtring selbst eine umfängliche Ringerhebung derart aufweist, daß durch Anlage der Ringerhebung an der Wandung der Dichtringkammer insbesondere in etwa radialer Richtung eine zonal erhöhte Verpressung des Dichtringes bewirkt wird. Der Dichtring ist somit als Profildichtung mit mindestens einer insbesondere etwa radialen Ringerhebung ausgebildet, die als Dichtkante oder Dichtwulst wirkt.

Die Erfindung basiert auf der Erkenntnis, daß die im Stand der Technik vor allem bei einer Kombination von Metall- und Kunststoffteilen zu beobachtenden Undichtigkeiten hauptsächlich bei starken Temperaturschwankungen auftreten, wodurch es aufgrund unterschiedlicher Temperaturausdehnungskoeffizienten der Materialien zu unterschiedlichen Wärmeausdehnungen kommt, die dann von der Elastizität des Dichtringes nicht mehr ausgeglichen werden können. Durch die erfindungsgemäße zonal erhöhte Verpresssung des Dichtringes wird nun aber praktisch eine "Elastizitätsreserve" geschaffen, die auch bei Temperaturwechselbeanspruchungen mindestens in einem Bereich von -40°C bis +100°C eine Dichtheit gewährleistet. Hierdurch ist es ohne Probleme möglich geworden, eine solche Anschlußvorrichtung insbesondere auch mit einer Kunststoff-Metall-Kombination von Basis- und Einsatzteil auch in solchen Bereichen einzusetzen, wo es zu starken Temperaturwechselbeanspruchungen kommt. Dies ist beispielsweise in Kraftfahrzeugen der Fall, so daß sich die erfindungsgemäße Anschlußvorrichtung sehr gut speziell für diese Anwendung eignet.

Weitere vorteilhafte Ausgestaltungsmerkmale der Erfindung sind in den Unteransprüchen sowie der folgenden Beschreibung eines bevorzugten Ausführungsbeispiels enthalten.

Anhand der Zeichnung soll nun die Erfindung beispielhaft näher erläutert werden. Dabei zeigen:
- Fig. 1: einen Axialschnitt durch ein Gehäuseteil einer erfindungsgemäßen Anschlußvorrichtung ohne Darstellung eines Steckerteils und
- Fig. 2: eine stark vergrößerte Abbildung des Bereichs II in Fig. 1.

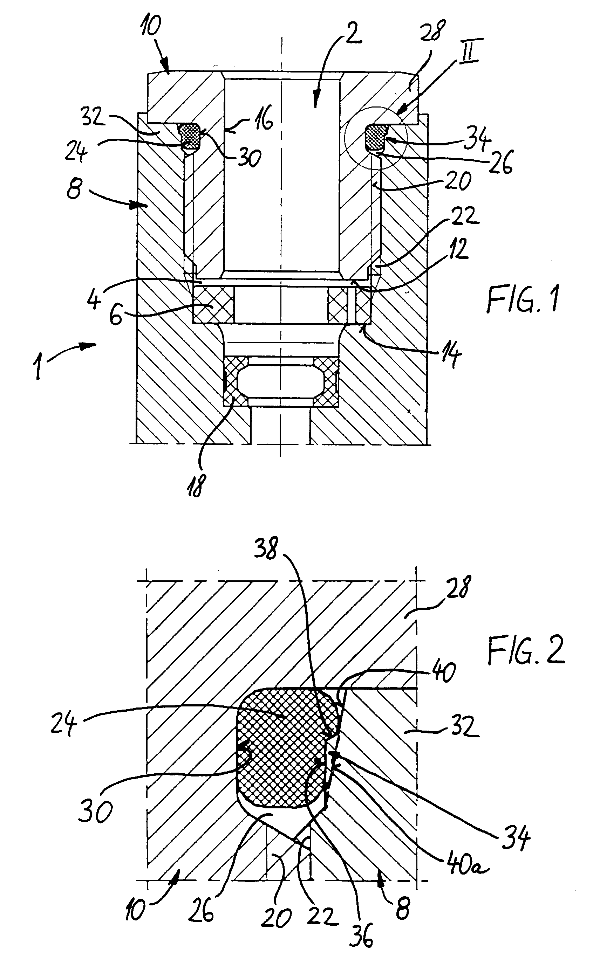

In Fig. 1 ist ein Gehäuseteil 1 einer Anschlußvorrichtung dargestellt. Das Gehäuseteil 1 weist eine Aufnahmeöffnung 2 zum umfänglich abgedichteten Einstecken eines nicht dargestellten, beispielsweise mit einer Druckleitung verbundenen Steckerteils auf. Innerhalb der Aufnahmeöffnung 2 ist in einer inneren Ringkammer 4 ein radialelastisch verformbarer Haltering 6 gelagert, der zum Arretieren des in die Aufnahmeöffnung 2 eingesteckten Steckerteils dient, indem er bereichsweise in eine Außenringnut des Steckerteils einrastet. Um nachfolgend eine Lösbarkeit des Steckerteils zu gewährleisten, ist das Gehäuseteil 1 zweiteilig ausgebildet, und zwar besteht es aus einem Basisteil 8 und einem lösbar in das Basisteil 8 eingesetzten Einsatzteil 10, wobei die den Haltering 6 aufnehmende Ringkammer 4 zwischen einer Stirnfläche 12 des Einsatzteils 10 und einer Bohrungsstufenfläche 14 des Basisteils 8 gebildet ist. Hierdurch kann das Steckerteil zusammen mit dem in seiner Außenringnut sitzenden Haltering 6 entnommen werden, nachdem das Einsatzteil 10 vom Basisteil 8 gelöst wurde.

Das Basisteil 8 kann Teil eines beliebigen Anschlußgehäuses, beispielsweise auch eines Ventilgehäuses, sein. Das Einsatzteil 10 weist eine axiale Durchgangsbohrung 16 auf, die einen Teil der Aufnahmeöffnung 2 bildet. Im der Öffnungsseite, von der her der Stecker einsteckbar ist, abgekehrten Bereich der Aufnahmeöffnung 2 ("unterhalb" des Halteringes 6) ist ein elastisches Ringelement 18 angeordnet, welches eine zusätzliche Abdichtung des Steckerteils sowie vorteilhafterweise auch eine axiale, in Löserichtung wirkende Vorspannkraft auf das Steckerteil bewirkt.

Im dargestellten Ausführungsbeispiel ist das Einsatzteil 10 als Einschraubteil mit einem Außengewinde 20 ausgebildet, mit dem es in ein Innengewinde 22 des Basisteils 8 einschraubbar ist. Es liegt jedoch auch im Bereich der Erfindung, anstelle dieser Schraubverbindung beispielsweise eine Bajonettverbindung oder dergleichen vorzusehen.

Zur Abdichtung zwischen dem Basisteil 8 und dem Einsatzteil 10 ist nun ein elastischer Dichtring 24 in einer zwischen den beiden Teilen gebildeten Dichtringkammer 26 angeordnet. Hierbei ist die Dichtringkammer 26 vorzugsweise einerseits von einer zwischen dem Außengewindeabschnitt 20 und einem insbesondere als Außensechskant ausgebildeten Betätigungsabschnitt 28 angeordneten Ringnut 30 des Einsatzteils 10 sowie andererseits von einem sich ausgehend von dem Innengewinde 22 in Öffnungsrichtung erstreckenden Ringabschnitt 32 des Basisteils 8 begrenzt.

Wie nun am besten in Fig. 2 zu erkennen ist, ist bei der dargestellten, bevorzugten Ausführungsform innerhalb der Dichtringkammer 26 (mindestens) eine den Kammer-Querschnitt (entspricht einem Axial- bzw. Radialschnitt bezogen auf die Steckachse) über den gesamten Umfang hinweg reduzierende Ringerhebung 34 derart gebildet, daß der Dichtring 24 zonal, d.h. im Bereich der Ringerhebung 34, mit einer erhöhten Verpressung beaufschlagt wird. Diese sich über den gesamten Umfang der Dichtringkammer 26 erstreckende Ringerhebung 34 bildet somit eine Dichtkante bzw. einen Dichtwulst. Durch diese erfindungsgemäß erreichte, erhöhte Verpressung des Dichtringes 24 wird eine "Elastizitätsreserve" geschaffen, die auch bei temperaturänderungsbedingten Erweiterungen der Dichtringkammer 26 stets eine dichtende, beidseitige Anlage des Dichtringes 24 gewährleistet, indem der Dichtring 24 diesen Erweiterungen der Dichtringkammer 26 ausgleichend folgt. Darüber hinaus werden durch die Erfindung auch Formungenauigkeiten bei der Herstellung des Basisteils 8 und/oder des Einsatzteils 10 ausgeglichen. Dies ist insbesondere dann von wesentlicher Bedeutung, wenn zumindest eines der beiden Teile aus Kunststoff im Spritzgußverfahren hergestellt wird, weil es hierbei zu Formungenauigkeiten kommen kann.

Durch die Erfindung können vorteilhafterweise das Basisteil 8 und das Einsatzteil 10 aus unterschiedlichen Materialien, d.h. insbesondere aus einer Kunststoff-Metall-Kombination, bestehen. Vorzugsweise bestehen das Basisteil 8 aus Kunststoff und das Einsatzteil 10 aus Metall. Es liegt aber ebenfalls im Bereich der Erfindung, dies "umgekehrt" vorzusehen, d.h. das Basisteil 8 aus Metall und das Einsatzteil 10 aus Kunststoff herzustellen.

Im Falle der dargestellten, bevorzugten Ausführungsform - siehe Fig. 2 - ist die Ringerhebung 34 im Bereich des Ringabschnittes 32 des Basisteils 8 angeordnet. Alternativ oder aber zusätzlich kann auch im Bereich der Ringnut 30 des Einsatzteils 10 eine entsprechende Ringerhebung vorgesehen sein. Wie dargestellt, weist zur Bildung der Ringerhebung 34 das Basisteil 8 ausgehend von dem Innengewinde 22 eine etwa zylindrische Innenfläche 36 auf, an die sich in Öffnungsrichtung eine - praktisch als Stufe - die Ringkammer 26 radial nach außen erweiternde, vorzugsweise konische Ringfläche 38 anschließt, die ihrerseits in eine vorzugsweise in Öffnungsrichtung konisch erweiterte Innenfläche 40 übergeht. Somit ist die Ringerhebung 34 von der etwa zylindrischen Innenfläche 36 und der vorzugsweise leicht konischen Ringfläche 38 gebildet. "Normalerweise", d.h. bei aus dem Stand der Technik bekannten, gattungsgemäßen Anschlußvorrichtungen, ist als äußere Begrenzung der Dichtringkammer 26 eine durchgehende, d.h. von dem Innengewinde 22 ausgehende, erweiterte Konusfläche des Ringabschnittes 32 des Basisteils 8 vorgesehen. Durch die erfindungsgemäße Ringerhebung 34 bleibt von dieser bisher üblichen Konusfläche, die in Fig. 2 gestrichelt angedeutet und mit 40a bezeichnet ist, nur der Bereich der konischen Innenfläche 40 übrig.

Der Dichtring 24 ist vorzugsweise als üblicher O-Ring ausgebildet.

## Patentansprüche

1. Anschlußvorrichtung für Druckleitungen, mit einem eine Aufnahmeöffnung (2) zum Einstecken eines Steckerteils aufweisenden Gehäuseteil (1), wobei das Gehäuseteil (1) zweiteilig aus einem Basisteil (8) und einem lösbar in das Basisteil (8) eingesetzten Einsatzteil (10) besteht und zwischen dem Basisteil (8) und dem Einsatzteil (10) eine Dichtringkammer (26) zur Aufnahme eines das Einsatzteil (10) gegen das Basisteil (8) abdichtenden, elastischen Dichtringes (24) gebildet ist, **dadurch gekennzeichnet**, daß der Dichtring (24) über mindestens eine umfängliche Ringerhebung (34) zonal mit einer erhöhten Verpressung beaufschlagt wird.

2. Anschlußvorrichtung nach Anspruch 1,
**dadurch gekennzeichnet**, daß das Basisteil (8) aus Kunststoff und das Einsatzteil (10) aus Metall bestehen.

3. Anschlußvorrichtung nach Anspruch 1,
**dadurch gekennzeichnet**, daß das Basisteil (8) aus Metall und das Einsatzteil (10) aus Kunststoff bestehen.

4. Anschlußvorrichtung nach einem oder mehreren der Ansprüche 1 bis 3,
**dadurch gekennzeichnet**, daß die Ringerhebung (34) gehäuseteilseitig innerhalb der Dichtringkammer (26), deren Kammer-Querschnitt über den gesamten Umfang hinweg reduzierend, gebildet ist.

5. Anschlußvorrichtung nach einem oder mehreren der Ansprüche 1 bis 4,
**dadurch gekennzeichnet**, daß das Einsatzteil (10) mit einem Außengewindeabschnitt (20) in ein Innengewinde (22) des Basisteils (8) eingeschraubt ist, wobei die Dichtringkammer (26) einerseits von einer zwischen dem Außengewindeabschnitt (20) und einem insbesondere als Außensechskant ausgebildeten Betätigungsabschnitt (28) angeordneten Ringnut (30) des Einsatzteils (10) sowie andererseits von einem sich ausgehend von dem Innengewinde (22) in Öffnungsrichtung erstreckenden Ringabschnitt (32) des Basisteils (8) begrenzt wird, wobei die Ringerhebung (34) vorzugsweise im Bereich des Ringabschnittes (32) des Basisteils (8) angeordnet ist.

6. Anschlußvorrichtung nach Anspruch 5,
**dadurch gekennzeichnet**, daß das Basisteil (8) zur Bildung der Ringerhebung (34) ausgehend von dem Innengewinde (22) eine etwa zylindrische Innenfläche (36) aufweist, an die sich in Öffnungsrichtung eine die Ringkammer (26) radial nach außen erweiternde Ringfläche (38) anschließt, die in eine vorzugsweise in Öffnungsrichtung konisch erweiterte Innenfläche (40) übergeht.

7. Anschlußvorrichtung nach einem oder mehreren der Ansprüche 1 bis 6,
**dadurch gekennzeichnet**, daß der Dichtring (24) als O-Ring ausgebildet ist.

8. Anschlußvorrichtung nach einem oder mehreren der Ansprüche 1 bis 6,
**dadurch gekennzeichnet**, daß die Ringerhebung an dem Dichtring (24) derart gebildet ist, daß die zonal erhöhte Verpressung durch Anlage der Ringerhebung an der Wandung der Dichtringkammer (26) entsteht.

9. Anschlußvorrichtung nach einem oder mehreren der Ansprüche 1 bis 8,
**dadurch gekennzeichnet**, daß zwischen einer auf der in das Basisteil (8) eingesetzten Seite gebildeten Stirnfläche (12) des Einsatzteils (10) und einer Bohrungsstufenfläche (14) des Basisteils (8) eine Ringkammer (4) für einen radialelastisch verformbaren, zum Arretieren des in die Aufnahmeöffnung (2) eingesteckten Steckerteils vorgesehenen Haltering (6) gebildet ist.

## Claims

1. Connection device for pressure pipes, with a housing part (1) having a receiving opening (2) for the insertion of a connector part, the housing part (1) being in two parts and consisting of a base part (8) and an insertion part (10) inserted detachably into the base part (8), and an annular sealing chamber (26) for receiving a resilient sealing ring (24) sealing off the insertion part (10) against the base part (8) being formed between the base part (8) and the insertion part (10), characterized in that the sealing ring (24) is acted upon over at least a circumferential annular shoulder (34) zonally with an increased compression.

2. Connection device according to Claim 1, characterized in that the base part (8) consists of plastic and the insertion part (10) consists of metal.

3. Connection device according to Claim 1, characterized in that the base part (8) consists of metal and the insertion part (10) consists of plastic.

4. Connection device according to one or more of Claims 1 to 3, characterized in that the annular shoulder (34) is formed on the housing part side inside the annular sealing chamber (26), reducing the chamber cross-section thereof over the entire circumference.

5. Connection device according to one or more of Claims 1 to 4, charcterized in that the insertion part (10) with an external threaded section (20) is screwed into an internal thread (22) of the base part (8), the annular sealing chamber (26) being delimited on the one hand by an annular groove (30) of the insertion part (10), arranged between the external threaded section (20) and an actuating section (28) formed in particular as an externally hexagonal element and on the other hand by an annular section (32) of the base part (8) extending from the internal thread (22) in the direction of the opening, the annular shoulder (34) being preferably arranged in the region of the annular section (32) of the base part (8).

6. Connection device according to Claim 5, characterized in that the base part (8), starting from the internal thread (22), has an approximately cylindrical internal surface (36) for forming the annular shoulder (34), which internal surface has adjoining it, in the direction of the opening, an annular surface (38) enlarging the annular chamber (26) radially outwards and merging with an internal surface (40) preferably widening out conically in the direction of the opening.

7. Connection device according to one or more of Claims 1 to 6, characterized in that the sealing ring (24) is formed as an O-ring.

8. Connection device according to one or more of Claims 1 to 6, characterized in that the annular shoulder is formed on the sealing ring (24) in such a way that the zonally increased compression arises as a result of contact pressure of the annular shoulder against the wall of the annular sealing chamber (26).

9. Connection device according to one or more of Claims 1 to 8, characterized in that an annular chamber (4) for a radially resiliently deformable retaining ring (6) intended for locking the connector part inserted into the receiving opening (2) is formed between an end surface (12) of the insertion part (10) formed on the side inserted into the base part (8) and a stepped bore surface (14) of the base part (8).

## Revendications

1. Dispositif de raccordement pour des conduites sous pression, comprenant un élément de boîtier (1) présentant une ouverture de réception (2) pour l'enfichage d'un élément de fiche, l'élément de boîtier (1) étant formé de deux parties, à savoir une partie de base (8) et une partie d'insertion (10) insérée de manière amovible dans la partie de base (8), une chambre de joint d'étanchéité (26) étant formée entre la partie de base (8) et la prtie d'insertion (10) pour accueillir une bague d'étanchéité élastique (24) qui assure l'étanchéité de la partie d'insertion (10) par rapport à la partie de base (8), caractérisé en ce que la bague d'étanchéité (24) est soumise par endroits à une compression initiale accrue par au moins une bosse annulaire périphérique (34).

2. Dispositif de raccordement selon la revendication 1,
caractérisé en ce que la partie de base (8) est réalisée en une matière synthétique, et la partie d'insertion (10) est réalisée en métal.

3. Dispositif de raccordement selon la revendication 1,
caractérisé en ce que la partie de base (8) est réalisée en métal, et la partie d'insertion (10) en une matière synthétique.

4. Dispositif de raccordement selon l'une ou plusieurs des revendications 1 à 3,
caractérisé en ce que la bosse annulaire (34) est formée côté boîtier à l'intérieur de la chambre de joint d'étanchéité (26) en réduisant la section transversale de celle-ci sur toute sa périphérie.

5. Dispositif de raccordement selon l'une ou plusieurs des revendications 1 à 4,
caractérisé en ce que la partie d'insertion (10) est vissée par une portion filetée (20) dans un taraudage (22) de la partie de base (8), la chambre de joint d'étanchéité (26) étant délimitée d'une part par une rainure annulaire (30) de la partie d'insertion (10), disposée entre la portion filetée (20), et une portion d'actionnement (28) ayant en particulier la forme d'un hexagone mâle, et, d'autre part, par une portion annulaire (32) de la partie de base (8) s'étendant à partir du taraudage (22) dans la direction d'ouverture, la bosse annulaire (34) étant de préférence agencée dans la région de la portion annulaire (32) de la partie de base (8).

6. Dispositif de raccordement selon la revendication 5,
caractérisé en ce que la partie de base (8) présente, pour former la bosse annulaire (34), une surface intérieure sensiblement cylindrique (36) qui part du taraudage (22), et qui est suivie dans la direction d'ouverture, d'une surface annulaire (38) qui élargit la chambre annulaire (26) radialement vers l'extérieur, cette surface annulaire (38) étant prolongée par une surface intérieure (40) de préférence élargie coniquement dans la direction d'ouverture.

7. Dispositif de raccordement selon l'une ou plusieurs des revendications 1 à 6,
caractérisé en ce que la bague d'étanchéité (24) a la forme d'un joint torique.

8. Dispositif de raccordement selon l'une ou plusieurs des revendications 1 à 6,
caractérisé en ce que la bosse annulaire de la bague d'étanchéité (24) est formée de manière à ce que la compression accrue par endroits soit produite par une application de la bosse annulaire sur la paroi de la chambre de joint d'étanchéité (26).

9. Dispositif de raccordement selon l'une ou plusieurs des revendications 1 à 8,
caractérisé en ce que, entre une face frontale (12) de la partie d'insertion (10), sur un côté inséré dans la partie de base (8) et une surface d'épaule d'alésage (14) de la partie de base (8), on a prévu une chambre annulaire (4) pour une bague de maintien (6) déformable élastiquement dans la direction radiale pour arrêter l'élément de fiche enfiché dans l'ouverture d'accueil (2).
